# EUROPEAN PATENT APPLICATION

(11) **EP 3 287 969 A1**
(43) Date of publication of application: **28.02.2018**
(21) Application number: 16782577.7
(22) Date of filing: 14.04.2016
(51) Int. Cl.: G06Q 20/32

(54) **MOBILE PAYMENT DEVICE AND MOBILE PAYMENT SYSTEM**

(30) Priority: 23.04.2015 CN 201510194852
(71) Applicant: China Unionpay Co., Ltd, Pudong New District, Shanghai 200135 (CN)
(72) Inventor: WAN, Sishuang, Pudong New Area Shanghai 200135 (CN); CHAI, Hongfeng, Pudong New Area Shanghai 200135 (CN); LU, Zhijun, Pudong New Area Shanghai 200135 (CN); HE, Shuo, Pudong New Area Shanghai 200135 (CN); YIN, Yawei, Pudong New Area Shanghai 200135 (CN); LIU, Guobao, Pudong New Area Shanghai 200135 (CN); GUO, Wei, Pudong New Area Shanghai 200135 (CN)
(74) Representative: Schneider, Sascha
(86) International application number: PCT/CN2016/079237
(87) International publication number: WO 2016/169430

(57) **Abstract**

The present invention relates to a mobile payment device, comprising: a data exchange module, which is used for exchanging data with the external device; a security management module, which is used for installing and managing applications for electronic transactions, the security management module comprises a Security Element, which is used for storing information of user's transaction account; and an identity verification module, which is used for verifying information of user identity; wherein, both the security management module and the identity verification module operates under a Trusted execution environment, the data exchange module operates under a Rich execution environment, the Trusted execution environment and the Rich execution environment being active non-simultaneously. The complete flow of the transaction is under safety protection.

## Description

### FIELD OF INVENTION

The present invention relates to the technical field of mobile payment, and more particularly, to a mobile payment device and a mobile payment system.

### BACKGROUND

As smart mobile devices (e.g. smart phones) are more and more used as "Payment Means", the existing smart operating systems which emphasize high quality user experience are unlikely to meet the security requirements that a payment application demands for the operating environment thereof. Since the system resources are limited, if the security of a smart operating system is improved, it is almost inevitable that the functionality and user experience will be lowered to some extent.

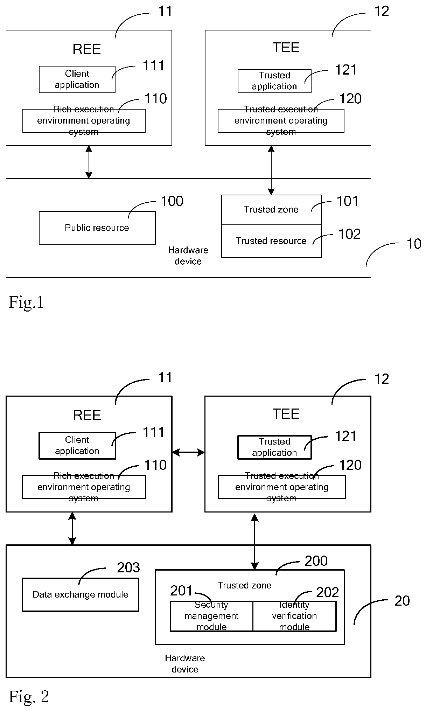

To address this issue, as one of the technical implementations for this solution, a Trusted execution environment (TEE) presented by GlobalPlatform has been widely applied. In accordance with this platform, as shown in Fig 1, a Rich execution environment (REE) 11 and a Trusted execution environment 12 are deployed in the mobile device; a client application 111 and a Rich execution environment operating system 110 are comprised in the Rich execution environment 11, a trusted application 121 and a Trusted execution environment operating system 120 are comprised in the Trusted execution environment 12. Meanwhile, the REE is running on a hardware device 10 of the mobile device, in which a trusted zone 101 is comprised, wherein the TEE is running in the trusted zone 101 of the hardware device, said trusted zone 101 cannot be accessed by the REE, trusted resources 102 can be managed via the trusted zone 101, and the REE may access public resources 100 in the hardware device 10. In this manner, the REE operating system executes functions of data input/output, information exchange, etc., while the TEE operating system executes functions related to protecting trusted resources or sensitive data.

However, even if such a technical implementation as Trusted executing environment is known, many security perils still exist in mobile payment devices of the prior art, which fails to take all aspects of transactions into account, therefore, further improvement is needed in the aspect of transaction security.

### SUMMARY OF INVENTION

One object of the invention is to provide a mobile payment device which is better at protecting transaction security.

To achieve the above object, the present invention provides a technical solution as follows:

A mobile payment device used for achieving electronic transactions between a user and a POS terminal, which comprises: a data exchange module, used for exchanging data with the external; a security management module, which communicates with the data exchange module, used for installing and managing applications for electronic transactions, the security management module comprising a Secure Element, which is used for storing information of transaction account of the user; and an identity verification module, which communicates with the security management module and the data exchange module, used for verifying information of user identity; wherein, the security management module and the identity verification module operate under a Trusted execution environment, the data exchange module operates under a Rich execution environment, the Trusted execution environment and the Rich execution environment being active non-simultaneously.

Preferably, the data exchange module comprises an NFC communication unit, which is used for exchanging data between the mobile payment device and a POS terminal.

Preferably, a communication channel is set up between the NFC communication unit and the Secure Element, the communication channel being configured as follows: the communication channel is by default in a closed state; after the identity verification module has verified information of user's identity, the communication channel is open to enable the POS terminal to communicate transaction data with the Secure Element via the NFC communication unit and the communication channel; after the communication of transaction data is accomplished, the communication channel is reset to the closed state.

Another object of the invention is to provide a mobile payment system that is better at protecting transaction security.

To achieve the above object, the present invention provides another technical solution as follows:

A mobile payment system, comprising: a mobile payment device, which comprises a Secure Element, the Secure Element being used for storing information of transaction account of the user, wherein a Rich execution environment operating system or a Trusted execution environment operating system is running on the mobile payment device; a POS terminal, which is used for initiating an electronic transaction with a mobile payment device; and a Trusted Service Management (TSM), which communicates with the mobile payment device, used for creating information of transaction accounts; wherein, the Rich execution environment operating system controls the mobile payment device to exchange data with the POS terminal and the user, the Trusted execution environment operating system controls the mobile payment device to use information of the transaction account for achieving the electronic transaction, and to verify information of the user identity.

Preferably, creating information of a transaction account comprises: a user sending an application for creating a transaction account to the Trusted Service Management (TSM), the Trusted Service Management (TSM) responding to the application and sending a creating instruction, the Rich execution environment operating system forwarding the instruction to the Trusted execution environment operating system, the Trusted execution environment operating system instructing the Secure Element to set up and store information of the transaction account.

Preferably, the mobile payment device further comprises an NFC communication unit, which is used for exchanging data between the mobile payment device and the POS terminal, wherein a communication channel is set up between the NFC communication unit and the Secure Element, the communication channel being configured as follows: the communication channel is by default in a closed state; after information of the user identity is verified, the communication channel is open to enable the POS terminal to communicate transaction data with the Secure Element via the NFC communication unit and the communication channel; after the communication of transaction data is accomplished, the communication channel is reset to a closed state.

The present invention further provides a method for mobile payment, the method is used for achieving electronic transactions, said method comprising the following steps: a) providing the mobile payment device of claim 1; b) a user using the mobile payment device to send an application for establishing a transaction account to the Trusted Service Management; c) after having sensed the radio frequency signal sent out by the POS terminal, the mobile payment device enables the identity verification module to verify information of user identity; d) after the verification is passed, the mobile payment device communicates the transaction data with the POS terminal under the Trusted execution environment; e) after the communication of transaction data is accomplished, the mobile payment device feeds the transaction result back to the user under the Rich execution environment.

According to the mobile payment device, the mobile payment system, and the method for mobile payment provided by each embodiment of the invention, three operations (i.e. applying for a transaction account, verifying identity information, and communicating transaction data) are achieved under a Trusted execution environment, and the rest operations are achieved under a Rich execution environment, such that the complete flow of the transaction is under safety protection, and an excellent user experience can be provided as well. Furthermore, the communication channel between the Secure Element and the NFC communication unit is set to a Normal Close state, which is merely open temporarily to communicate transaction data after the identity verification is passed, which facilitates shielding from possible security perils, and increases the ability of protection for transactions.

### BRIEF DESCRIPTION OF DRAWINGS

Fig. 1 shows a conceptual schematic diagram of a mobile device which has deployed a Rich execution environment and a Trusted execution environment in the prior art.
Fig. 2 shows a block diagram of the mobile payment device of the first embodiment of the invention.
Fig. 3 is a flowchart illustrating the switchover between various states of an electronic transaction displayed on the display screen of a mobile payment device.
Fig. 4 is a flowchart of the method for mobile payment provided by the third embodiment of the invention.
Fig. 5 shows a specific procedure of the user sending an application for setting up a transaction account to the Trusted Service Management (TSM) via the mobile payment device.
Fig. 6 shows a specific procedure of enabling the identity verification module to verify information of user identity after the mobile payment device has read the account information.
Fig. 7 shows a specific procedure of the mobile payment device communicating transaction data with the POS terminal after information of user identity has passed the verification.

### DESCRIPTION OF EMBODIMENTS

It should be noted that, the communication referred to herein between the security management module or the identity verification module and the data exchange module is required to go through a switchover between the Rich execution environment and the Trusted execution environment. The Rich execution environment and the Trusted execution environment are active non-simultaneously, respectively.

The client application, the Rich execution environment operating system and the security application, the Trusted execution environment operating system referred to herein are generally installed and operating on the related modules/units of the mobile payment device in the form of software.

As shown in Fig 2, the first embodiment of the invention provides a mobile payment device, of which a hardware device 20 comprises a trusted zone 200, the trusted zone 200 may only be accessed by a Trusted execution environment 12, rather than a Rich execution environment 11. Stated differently, the trusted zone 200 is invisible to the Rich execution environment 11.

Particularly, a data exchange module 203 is comprised in the hardware device 20, which is used for exchanging data with the external (e.g. a user, a POS terminal). The data exchange module 203 may comprise: an input/output sub-module, which is the interface for exchanging data with the external, the input/output sub-module particularly comprises a user interface device, a data port device and other type of input/output devices, such as a touch screen, a display screen, a keypad, etc., and a wireless communication sub-module, which particularly comprises an NFC communication unit, and/or a base band processor, a GPS unit.

When the mobile payment device get close to a POS terminal, the NFC communication unit may exchange data between the mobile payment device and the POS terminal.

A security management module 201 and an identity verification module 202 are comprised in the trusted zone 200. The trusted zone 200 may only be visible to the Trusted execution environment 12.

The security management module 201 communicates with the data exchange module 203, which comprises hardware required for implementing the function of security management, a security application which is able to be used for offline transactions may be installed thereon, for example, an application for administering electronic cash related to bank card transactions, etc.

The security management module 201 further comprises a Secure Element, which is used for storing information of transaction account of a user.

The identity verification module 202 communicates with the security management module 201 and the data exchange module 203, respectively. It is used for verifying information of user identity, such as fingerprint, iris, heartbeat, voiceprint, facial image, etc.

In a preferred situation, the data exchange module comprises a fingerprint collection device, accordingly, the identity verification module comprises a fingerprint recognition unit, a fingerprint information is input by the user via the fingerprint collection device such that the identification verification module is able to perform the verification under the Trusted execution environment.

It should be understood that, the mobile payment device may further comprise other modules, for example: a storage module (not shown), which comprises a disk storage, a flash storage, etc., used for storing data; a data processing module (not shown), which comprises a microprocessor, a microcontroller, a digital signal processor, and/or an application-specific integrated circuit, etc. The data processing module is required to support a plurality of wireless communication protocols such that the mobile payment device is able to communicate with an external device via the data exchange module 203.

The Rich execution environment 11 comprises a client application 111, a Rich execution environment operating system 110, which is installed and running on the related modules other than the trusted zone in the mobile payment device. The Trusted execution environment 12 comprises a trusted application 121 and a Trusted execution environment operating system 120, which is installed and running on the trusted zone 200.

According to a further implementation of the above embodiment, a communication channel is set up between the NFC communication unit and the Secure Element, said communication channel is configured as follows: A. the communication channel is by default in a closed state; B. after the identity verification module has verified information of user's identity, the communication channel is open to enable the POS terminal to communicate transaction data with the Secure Element via the NFC communication unit or the communication channel; C. after the transaction data communication is accomplished, the communication channel is reset to a closed state.

The mobile payment device provided by the first embodiment above performs both the operation related to information of user's transaction account and the operation of verifying information of user identity under the Trusted execution environment, taking each stage of electronic transactions into account. As a result, a better safety protection can be applied to the transaction.

Furthermore, comparing to the mobile payment devices of the prior art, the solution as claimed sets the communication channel between the Secure Element and the NFC communication unit to a Normal Close state, which is only open temporarily to communicate transaction data after the identity verification has been passed. In this manner, the transactions can be shielded from possible security perils, and the ability of protection for transactions can be increased.

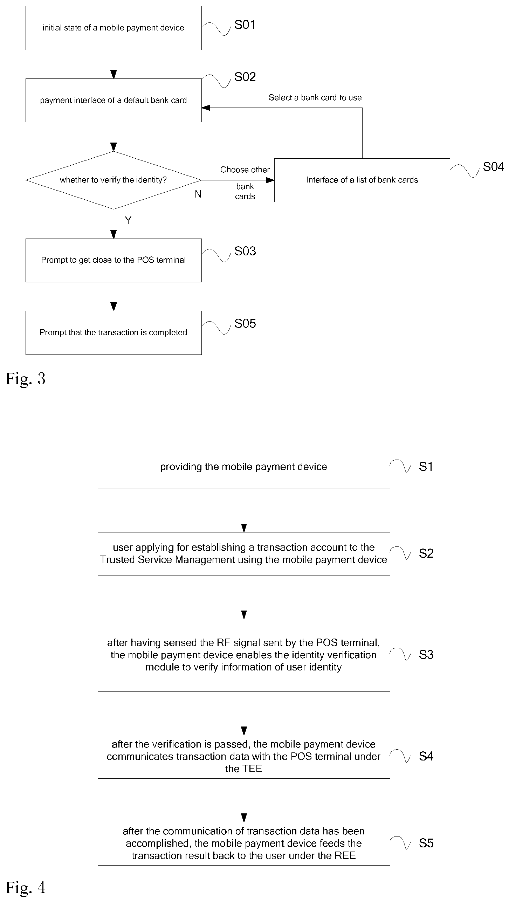

The mobile payment device provided by the invention may display all types of prompt information to the user on the display screen, these information may correspond to different states of the electronic transaction, respectively. Fig. 3 ilustrates the switchover between various states of the electronic transaction displayed on the display screen of mobile payment device.

State S01, the mobile device of the user is in an initial state, such as a lock screen;
State S02, when the mobile payment device held by the user gets close to a POS terminal, a payment interface related to the default bank card pops up, and prompts the user to verify his/her identity;
State S03, if the user performed identity verification and it passed, the user is prompted to get the mobile payment device close to the POS terminal;
State S04, if the user chooses to use other bank cards, the identity verification is not executed, and an interface of a list of bank cards is displayed;
State S02, when the user has selected a bank card to use, the payment interface of the default card is redisplayed;
State S05, when the user's mobile payment device has accomplished the transaction with the POS terminal, an interface is displayed prompting that the transaction has been finished.

The second embodiment of the invention provides a mobile payment system, which comprises a mobile payment device, a POS terminal and a Trusted Service Management (TSM). A Secure Element (SE) is disposed in the mobile payment device, the Secure Element is used for storing information of user's transaction account, a Rich execution environment operating system or a Trusted execution environment operating system is running on the mobile payment device. At any time, only one type of operating systems is active, the other one may be in a sleep state.

The POS terminal is disposed in a merchant, which is used for initiating an electronic transaction with the mobile payment device held by the user.

The user may send an application for creating a transaction account to the Trusted Service Management via the mobile payment device. Information of the created transaction account may be stored in a Secure Element.

The Rich execution environment operating system controls the mobile payment device to exchange data with the POS terminal and the user, the Trusted execution environment operating system controls the mobile payment device to use information of the transaction account for achieving the electronic transaction, as well as to verify information of the user identity.

To be specific, the process of creating information of a transaction account comprises: the user sende an application for creating a transaction account to the Trusted Service Management via the Rich execution environment operating system, the Trusted Service Management responds to the application and sends a creating instruction, the Rich execution environment operating system forwards the instruction to the Trusted execution environment operating system, and the Trusted execution environment operating system instructs the Secure Element to set up and store information of the transaction account.

The mobile payment device in the mobile payment system as stated above may further comprise an NFC communication unit, which is used for exchanging data between the mobile payment device and the POS terminal. A communication channel may be set up between the NFC communication unit and the Secure Element. In order to be shielded from the possible security perils, as a further improvement, said communication channel can be configured in the following way: the communication channel is by default set in a closed state; after information of user identity has been verified, the communication channel is set in an open state by a particular instruction to enable the POS terminal to communicate transaction data with the Secure Element via the NFC communication unit and the communication channel; after the communication of transaction data is accomplished, the communication channel is reset to the closed state.

During the process of the above payment system executing an electronic transaction, the transaction information and/or the sensitive data can be protected more impeccably. Even in the process of creating a transaction account, the process of the Secure Element setting up and storing information of the transaction account is also executed under the Trusted execution environment, such that the complete flow of the electronic transaction can get have a better protection for data. The communication channel between the NFC communication unit and the Secure Element is in a Normal Close state by default, and is only open temporarily while the transaction data is being communicated, which also contributes to shielding from the security perils, achieving a full-scale protection for the transactions.

The third embodiment of the invention provides a mobile payment method, which is used for achieving the electronic transactions between the user and the POS terminal via the mobile payment device according to claim 1, as shown in Fig. 4, said method comprises the following steps:
Step S1, providing the mobile payment device that is provided in the first embodiment of the invention above.

Said mobile payment device comprises a data exchange module, a security management module and an identity verification module. The data exchange module is used for exchanging data with the external. The security management module communicates with the data exchange module, which is used for installing and managing applications for electronic transactions, the security management module comprises a Secure Element, the Secure Element is used for storing information of user's transaction account. The identity verification module communicates with the security management module and the data exchange module, which is used for verifying information of user identity. Wherein the security management module, the identity verification module operates under the Trusted execution environment, the data exchange module operates under the Rich execution environment, and the Trusted execution environment and the Rich execution environment are active non-simultaneously.

Step S2, the user applying for establishing a transaction account to the Trusted Service Management using the mobile payment device.

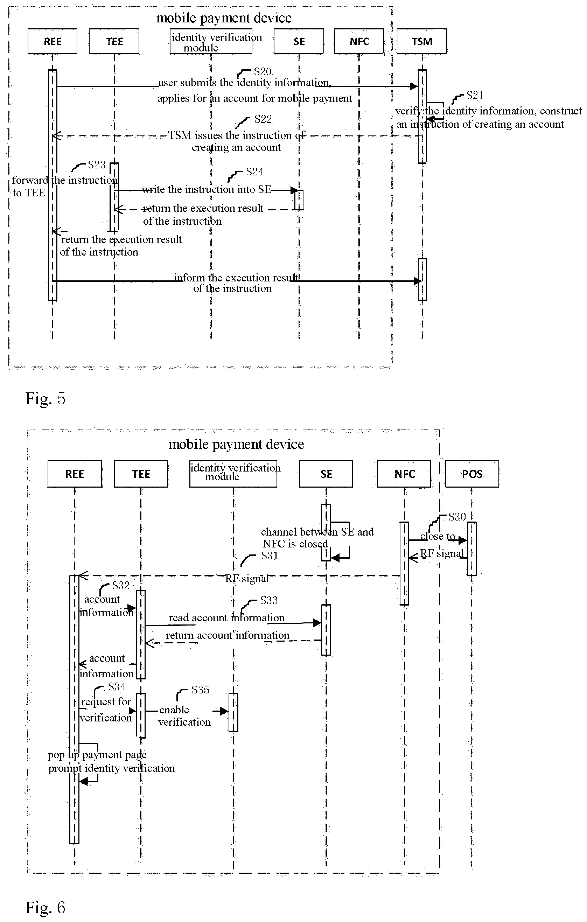

Fig. 5 shows the specific procedure of step S2, said step S2 particularly comprises the following sub-steps:
Sub-step S20, the user submits the identity information, and sends an application for an account used for mobile payment to the Trusted Service Management;
Sub-step S21, the Trusted Service Management verifies information of user identity, and constructs an instruction for creating an account;
Sub-step S22, the Trusted Service Management issues the instruction for creating an account to the REE;
Sub-step S23, the REE forwards the instruction to the TEE;
Sub-step S24, the TEE writes the creating instruction into the SE;

Subsequently, the execution result of the creating instruction is returned from the SE to the TEE, and then the execution result is returned from the TEE to the REE, and finally the execution result is returned from the REE to the Trusted Service Management.

Step S3, after having sensed the radio frequency (RF) signal sent by the POS terminal, the mobile payment device enables the identity verification module to verify information of user identity.

Fig. 6 shows the specific procedure of step S3, said step S3 particularly comprises the following sub-steps:
Sub-step S30, the mobile payment device gets close to the POS terminal;
   In a preferred situation, an NFC communication unit is disposed in the mobile payment device, when the POS terminal has sensed the NFC communication unit of the mobile payment device, it may be determined that the mobile payment device is close to the POS terminal.
Sub-step S31, a RF signal is sent out by the POS terminal, and is received by the mobile payment device via the NFC communication unit;
   It should be understood that, prior to the sub-step S30, the RF signal may have already been sent out by the POS terminal, and the RF signal is only received after the mobile payment device is close to the POS terminal. Hence, it may also be regarded that the above sub-step S30 and sub-step S31 are not necessarily in a sequential order, but may be executed concurrently.
Sub-step S32, the REE sends a request for reading the account information to the TEE, in order that the user identity can be verified;
Sub-step S33, the TEE reads the account information from the SE;
   Subsequently, the account information is returned from the SE to the TEE, and then returned from the TEE to the REE;
Sub-step S34, after the REE receives the account information, a request for identity verification is sent to the TEE;
Sub-step S35, the TEE enables the identity verification module to verify the user identity;
   Particularly, the identity verification module determines whether information of user identity is coincide with the account information; if so, then the verification is passed, the REE will pop up a payment page, prompting that the identity verification is passed.

Step S4, after the verification is passed, the mobile payment device communicates transaction data with the POS terminal under the Trusted execution environment.

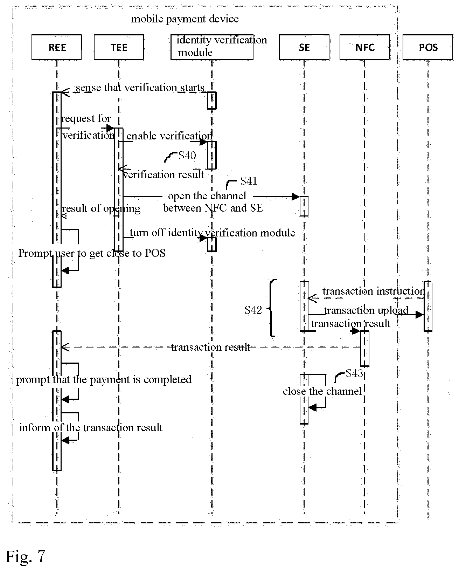

Fig. 7 shows the specific procedure of step S4, which particularly comprises the following sub-steps:
Sub-step S40, the identity verification module returns the result of user identity verification to the TEE;
   As the execution result of sub-step S35, this sub-step is executed straight after it.
Sub-step S41, the TEE opens the communication channel between the NFC communication unit and the SE;
   Subsequently, the TEE may return the result of opening the communication channel, and turn off the identity verification module, as well as continue prompting the user to get the mobile payment device closer to or keep in proximity to the POS terminal.
Sub-step S42, the POS terminal and the SE directly communicate transaction data with each other via the NFC communication unit and said security channel.
   Particularly, the POS terminal sends a transaction instruction to the SE, the SE uploads the transaction data to the POS terminal, the SE returns the transaction result to the REE via the NFC communication unit.
Sub-step S43, the communication channel between the NFC communication unit and the SE is closed.

Step S5, after the communication of transaction data has been accomplished, the mobile payment device feeds the transaction result back to the user under the Rich execution environment.

According to a further implementation of the embodiment above, in the step S3, as shown in conjunction with Fig. 3, when the user does not use the default card (the default transaction account) for transaction, but chooses to use other bank cards (other transaction accounts) instead, the REE may similarly require the TEE to read information of all bank cards of the user, the TEE reads information of all bank cards from the SE and then returns it to the REE. When the user has selected one certain bank card via the REE, the REE may instruct the TEE to switch the transaction account, the TEE sets the selected bank card as the default transaction account, and subsequently returns the switchover result to the REE, the REE will display a new payment interface to the user.

According to the method for mobile payment provided by the third embodiment above, three operations (i.e. applying for a transaction account, verifying the identity information and communicating the transaction data) are disposed under the Trusted execution environment, the rest operations are disposed under the Rich execution environment, in this way the complete flow of the transaction is under safety protection and an excellent user experience can be provided as well.

Furthermore, comparing to the mobile payment method of the prior art, the present invention sets the communication channel between the Security Element and the NFC communication channel to a Normal Close state, which is only opened temporarily to communicate transaction data after the identity verification has been passed, improving the security of the transactions.

The above illustration is merely specific to the preferred embodiments of the invention, and is not intended to limit the scope of protection of the invention. Various modified designs may be made by one of ordinary skill in the art, without departing from the conception and the appendant claims of the invention.

## Claims

1. A mobile payment device, for achieving electronic transactions between a user and a POS machine, comprising:
a data exchange module, used for exchanging data with the external;
a security management module, which communicates with the data exchange module, used for installing and managing applications for electronic transactions, the security management module comprising a Secure Element, the Secure Element being used for storing information of transaction account of the user; and
an identity verification module, which communicates with the security management module and the data exchange module, used for verifying information of user identity;
wherein, the security management module and the identity verification module operate under a Trusted execution environment, the data exchange module operates under a Rich execution environment, the Trusted execution environment and the Rich execution environment being active non-simultaneously.

2. According to the mobile payment device of claim 1, wherein, the data exchange module comprises an NFC communication unit, which is used for exchanging data between the mobile payment device and a POS terminal.

3. According to the mobile payment device of claim 2, wherein, the data exchange module comprises a fingerprint collection device, the identity verification module comprises a fingerprint recognition unit, fingerprint information is input by a user via the fingerprint collection device for being verified by the identity verification module under the Trusted execution environment.

4. According to the mobile payment device of claim 2, wherein, a communication channel is set up between the NFC communication unit and the Secure Element, said communication channel being configured as follows:
the communication channel is by default in a closed state;
after the identity verification module has verified information of user's identity, the communication channel is open to enable the POS terminal to communicate transaction data with the Secure Element via the NFC communication unit and the communication channel;
after the communication of transaction data is accomplished, the communication channel is reset to the closed state.

5. According to the mobile payment device of any one of claim 1 to 4, wherein, said mobile payment device is a smart phone.

6. A mobile payment system, comprising:
a mobile payment device, which comprises a Secure Element, the Secure Element being used for storing information of transaction account of a user, wherein a Rich execution environment operating system or a Trusted execution environment operating system is running on the mobile payment device;
a POS terminal, which is used for initiating an electronic transaction with the mobile payment device; and
a Trusted Service Management, which communicates with the mobile payment device for creating information of a transaction account;
wherein, the Rich execution environment operating system controls the mobile payment device to exchange data with the POS terminal and the user, the Trusted execution environment operating system controls the mobile payment device to use information of the transaction account for achieving the electronic transaction, and to verify information of the user identity.

7. According to the mobile payment system of claim 6, wherein, said creating information of a transaction account comprises:
a user sending an application for creating a transaction account to the Trusted Service Management, the Trusted Service Management responding to the application and sending a creating instruction, the Rich execution environment operating system forwarding the instruction to the Trusted execution environment operating system, the Trusted execution environment operating system instructing the Secure Element to set up and store information of the transaction account.

8. According to the mobile payment system of claim 6 or 7, wherein, the mobile payment device further comprises an NFC communication unit, which is used for exchanging data between the mobile payment device and a POS terminal, wherein a communication channel is set up between the NFC communication unit and the Secure Element, the communication channel being configured as follows:
the communication channel is by default in a closed state ;
after information of the user identity is verified, the communication channel is open to enable the POS terminal to communicate transaction data with the Secure Element via the NFC communication unit and the communication channel;
after the communication of transaction data is accomplished, the communication channel is reset to the closed state.

9. A method for mobile payment, used for achieving electronic transactions, comprising the following steps:
a) providing the mobile payment device of claim 1;
b) a user using the mobile payment device to send an application for establishing a transaction account to the Trusted Service Management;
c) after having sensed the radio frequency signal sent out by the POS terminal, the mobile payment device enables the identity verification module to verify information of user identity;
d) after the verification is passed, the mobile payment device communicates the transaction data with the POS terminal under the Trusted execution environment;
e) after the communication of transaction data is accomplished, the mobile payment device feeds the transaction result back to the user under the Rich execution environment.

10. According to the method of claim 9, wherein, the mobile payment device further comprises an NFC communication unit, which is used for exchanging data between the mobile payment device and the POS terminal, wherein a communication channel is set up between the NFC communication unit and the Secure Element, Step d) further comprises:
d1) after information of the user identity is verified, the communication channel is open;
d2) the POS terminal and the Secure Element execute the communication of transaction data via the NFC communication unit and the communication channel;
d3) after the communication of transaction data is accomplished, the communication channel is closed.
